# EUROPÄISCHE PATENTSCHRIFT

(11) **EP 0 934 971 B1**
(45) Veröffentlichungstag und Bekanntmachung des Hinweises auf die Patenterteilung: **01.12.2004**
(21) Anmeldenummer: 99100966.3
(22) Anmeldetag: 20.01.1999
(51) Int. Cl.: C08J 9/14, C08L 75/04

(54) **Verfahren zur Herstellung von PU-Hartschaumstoffen mit kleinen Zelldurchmessern und ihre Verwendung**
Process for preparing rigid PU foams with small cell diameter, and their use
Procédé de préparation de mousses rigides de PU à faible diamètre de cellules, et leur utilisation

(30) Priorität: 07.02.1998 DE 19804914
(43) Veröffentlichungstag der Anmeldung: 11.08.1999
(73) Patentinhaber: BASF AKTIENGESELLSCHAFT, 67056 Ludwigshafen (DE)
(72) Erfinder: Volkert, Otto Dr., 67273 Weisenheim (DE); Scherzer, Dietrich Dr., 67433 Neustadt (DE)

(56) Entgegenhaltungen:
- EP-A- 0 604 129
- GB-A- 1 442 858

## Beschreibung

Gegenstand der Erfindung ist ein Verfahren zur Herstellung von Polyurethan-Hartschaumstoffen - im folgenden abgekürzt PU-Hartschaumstoffe genannt - mit kleinen Zelldurchmessern aus an sich bekannten Aufbaustoffen in Gegenwart von Perfluoralkanen als Treibmittel und die Verwendung dieser PU-Hartschaumstoffe zum Ausschäumen von Hohlräumen in Kühlmöbeln oder Heizungselementen sowie als Dämmstoff für Verbundelemente.

Die Herstellung von Verbund- oder Sandwichelementen, die aufgebaut sind aus einen PU-Hartschaumstoff und mindestens einer Deckschicht aus einem starren oder elastischen Material, wie z.B. Papier, Kunststoffolien, Metallblechen, Glasvliesen, Spanplatten u.a., ist bekannt. Bekannt ist ferner die Ausschäumung von Hohlräumen in Haushaltgeräten wie Kühlmöbeln, beispielsweise Kühlschränken oder -truhen oder von Heißwasserspeichern, mit PU-Hartschaumstoff als Wärmedämmstoff. Um Schaumfehlstellen zu vermeiden, muß hierzu das schaumfähige PU-Reaktionsgemisch innerhalb einer kurzen Zeit in den zu isolierenden Hohlraum eingefüllt werden. Zum Ausschäumen derartiger Gegenstände werden üblicherweise Niederdruck- oder vorzugsweise Hochdruckmaschinen eingesetzt.

Hierfür geeignete wärme- und kältedämmende PU-Hartschaumstoffe können bekanntermaßen durch Umsetzung von organischen Polyisocyanaten mit einer oder mehreren höhermolekularen Verbindungen mit mindestens zwei reaktiven Wasserstoffatomen, vorzugsweise Polyester- und/oder Polyetherpolyolen, sowie üblicherweise unter Mitverwendung von niedermolekularen Kettenverlängerungsmitteln und/oder Vernetzungsmitteln in Gegenwart von Treibmitteln, Katalysatoren und gegebenenfalls Hilfsmitteln und/oder Zusatzstoffen hergestellt werden. Bei geeigneter Wahl der Aufbaukomponenten können hierbei PU-Hartschaumstoffe mit einer niedrigen Wärmeleitzahl und guten mechanischen Eigenschaften erhalten werden.

Eine Variante der Isolierung mit PU-Schäumen besteht darin, die Schäume offenzellig zu machen und unter Vakuum in einer difusionsdichten Verpackung einzusetzen.

Eine zusammenfassende Übersicht über die Herstellung von PU-Hartschaumstoffen und ihre Verwendung als Deck- oder vorzugsweise Kernschicht in Verbundelementen sowie ihre Anwendung als Dämmschicht in der Kühl- oder Heizungstechnik wurde z.B. publiziert in Polyurethane, Kunststoff-Handbuch, Band 7, 1. Auflage 1966, herausgegegeben von Dr. R. Vieweg und Dr. A. Höchtlen, 2. Auflage 1983, herausgegeben von Dr. Günter Oertel, und 3. Auflage 1993, herausgegeben von Dr. Günter Oertel, Carl Hanser Verlag, München, Wien.

Da die Aufgabe der PU-Schäume bei diesen Anwendungen in erster Linie darin besteht, wärmeisolierend zu wirken, ist eine geringe Wärmeleitfähigkeit die wichtigste Schaumeigenschaft. Eine Möglichkeit, die Wärmeleitfähigkeit eines Schaumes zu reduzieren, besteht darin, die Zelldurchmesser zu verkleinern. Auch bei Arbeiten mit offenzelligen Schäumen unter verringertem Druck ist der Zelldurchmesser der Schäume entscheidend für das benötigte Vakuum. Schäume mit kleineren Zelldurchmessern sind deshalb ein wichtiges Forschungsziel.

Nach der klassischen Schäumtheorie entstehen beim Vermischen der Ausgangskomponenten sogenannte Nukleierungskeime, in die das Treibmittel eindiffundiert. Die Menge der Keime bestimmt bei einer vorgegebenen Schaumdichte die Größe der Zelldurchmesser. In üblichen, wassergetriebenen Hartschaumsystemen mit einer Dichte von 30 bis 40 g/l beträgt die Konzentration der Nukleierungskeime 10⁶ bis 10⁷ Keime/g Schaum, was zu Zelldurchmessern von etwa 200 bis 300 µm führt.

Alle Versuche, durch klassische Methoden der homogenen und heterogenen Nukleierung die Zahl der Keime merklich zu erhöhen, ergaben nur graduelle Verbesserungen.

Einen großen Schritt nach vorn brachten Schäume mit einemulgierten Perfluorverbindungen, wie sie beispielsweise in EP-A 351 614 beschrieben sind. Es wurden Zelldurchmesser um 100 µm erreicht. Der genaue Mechanismus der nukleierenden Wirkung ist dabei nicht bekannt. Es wird vermutet, daß die niedrige Grenzflächenspannung die Ursache ist.

Es wurde nun gefunden, daß Schäume mit einem nochmals erheblich verringertem Zelldurchmesser hergestellt werden können, wenn folgendes Verfahren angewendet wird:

Eine Mischung aus Polyolen, Katalysatoren, Schaumstabilisatoren und gegebenenfalls sonstigen Zusatzstoffen, zumeist als Polyolkomponente oder auch A-Komponente bezeichnet, und ein Polyisocyanat als B-Komponente werden getrocknet und durch Evakuieren luftfrei gemacht. Dann wird in bekannter Weise ein Perfluoralkan in die A- und/oder B-Komponente einemulgiert. Anschließend werden A- und B-Komponente vermischt und aufschäumen lassen.

Man erhält überraschenderweise Schäume mit Zelldurchmessern bis zu unter 50 µm. Dies ist insofern völlig unerwartet, da durch das Entfernen der Luft, die nach der herrschenden Lehrmeinung für die Bildung von Nukleierungskeimen sehr wichtig ist, keine Nukleierung und dadurch nur sehr grobzellige Schäume zu erwarten gewesen wären.

In einer weiteren Variante der Erfindung wird das Aufschäumen des Komponentengemisches in einer Form durchgeführt, die vor bzw. während des Schäumens evakuiert wurde. Es ist auf diese Weise möglich, die Dichte der erhaltenen Schäume beträchtlich zu erniedrigen.

Gegenstand der Erfindung ist somit ein Verfahren zur Herstellung von feinzelligen PU-Hartschaumstoffen, insbesondere mit Zelldurchmessern bis zu unter 50 µm und dadurch geringer Wärmeleitfähigkeit durch Umsetzung von
a) organischen und/oder modifizierten organischen Polyisocyanaten mit
b) mindestens einer Verbindung mit mindestens zwei reaktiven Wasserstoffatomen in Gegenwart von
c) Treibmitteln,
d) Katalysatoren und gegebenenfalls
e) Hilfsmitteln und/oder Zusatzstoffen,
das dadurch gekennzeichnet ist, daß als Treibmittel c) Perfluorverbindungen eingesetzt werden, die in a) und/oder b) bis e) emulgiert sind, wobei die Ausgangskomponenten a) bis e) vorher durch Erwärmen unter Vakuum wasser- und luftfrei gemacht wurden.

Eine weitere Ausführungsform der Erfindung besteht darin, daß das Verschäumen in einer geschlossenen Schaumform unter Vakuum durchgeführt wird.

Zur Herstellung der PU-Hartschaumstoffe nach dem erfindungsgemäßen Verfahren finden an sich bekannte Aufbaukomponenten Verwendung, zu denen im einzelnen folgendes auszuführen ist.
a) Als organische Polyisocyanate kommen die an sich bekannten aliphatischen, cycloaliphatischen, araliphatischen und vorzugsweisen aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2, 4'und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige Isocyanate, d.h. Produkte, die durch partielle chemische Umsetzung organischer Di- und/oder Polyisocyanate erhalten werden, verwendet. Beispielhaft genannt seien Ester-, Harnstoff-, Biuret-, Allophanaz-, Carbodiimid-, Isocyanurat- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 1.500, modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können; beispielsweise genannt seien: Diethylen-, Dipropylen-glykol, Polyoxyethylen-, Polyoxypropylen- und Polyoxypropylen-polyoxyethylen-glykole oder -triole. Geeignet sind auch NCO-Gruppen enthaltende Prepolymere mit NCO-Gehalten von 25 bis 9 Gew.-%, vorzugsweise von 21 bis 14 Gew.-%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/ oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen daher vorzugsweise zur Anwendung zur Herstellung der PU-Hartschaumstoffe: Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solchen auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethandiisocyanat-Isomerengehalt von 30 bis 80 Gew.-%, vorzugsweise von 30 bis 55 Gew.-%.
b) Als Verbindungen mit mindestens zwei reaktiven Wasserstoffatomen (b) kommen zum einen höhermolekulare Verbindungen, vorzugsweise Polyhydroxylverbindungen mit einer Hydroxylzahl von 150 bis 850, vorzugsweise von 350 bis 800, in Betracht.
   Beispielhaft genannt seien Polythioether-polyole, Polyesteramide, hydroxylgruppenhaltige Polyacetale, hydroxylgruppenhaltige aliphatische Polycarbonate und vorzugsweise Polyester-polyole und Polyetherpolyole. Anwendung finden auch Mischungen aus mindestens zwei der genannten Polyhydroxylverbindungen, sofern diese eine durchschnittliche Hydroxylzahl im vorgenannten Bereich aufweisen.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlendioxid, Helium, Argon u.a. in der Schmelze bei Temperaturen von 150 bis 250°C, vorzugsweise von 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 0 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 3 und eine Hydroxylzahl von 150 bis 400 und insbesondere von 200 bis 300.
   Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und mindestens einem Startermolekül, das 2 bis 8, vorzugsweise 3 bis 8 reaktive Wasserstoffatome gebunden enthält, oder durch kationische Polymerisation mit Lewis-Säure, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak.
   Vorzugsweise verwendet werden mehrwertige, insbesondere dreiund/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose.
   Die Polyether-polyole besitzen eine Funktionalität von vorzugsweise 3 bis 8 und insbesondere 3 und 6 Hydroxylzahlen von vorzugsweise 300 bis 850 und insbesondere von 350 bis 800.
   Als Polyether-polyole eignen sich ferner Melamin-Polyetherpolyol-Dispersionen gemäß EP-A 23 987 (US-A 4 293 657), Polymer-Polyetherpolyol-Dispersionen, hergestellt aus Polyepoxiden und Epoxidharzhärtern in Gegenwart von Polyether-polyolen gemäß DE 29 43 689 (US-A 4 305 861), Dispersionen von aromatischen Polyestern in Polyhydroxylverbindungen gemäß EP-A 62 204 (US-A 4 435 537) oder DE-A 33 00 474, Dispersionen von organischen und/oder anorganischen Füllstoffen in Polyhydroxylverbindungen gemäß EP-A 11 751 (US-A 4 243 755), Polyharnstoff-Polyether-polyol-Dispersionen gemäß DE-A 31 25 402, Tris-(hydroxyalkyl)isocyanurat-Polyether-polyol-Dispersionen gemäß DE-A 33 42 176 und DE-A 33 42 177 (US-A 4 560 708).
   Die Polyether-polyole können ebenso wie die Polyester-polyole einzeln oder in Form von Mischungen verwendet werden. Ferner können sie mit den obengenannten Dispersionen, Suspensionen oder Polyester-polyolen sowie den hydroxylgruppenhaltigen Polyesteramiden, Polyacetalen und/oder Polycarbonaten gemischt werden.
   Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen gesättigten und/oder ungesättigten Carbonsäuren bzw. deren Anhydriden und Aminoalkoholen oder Mischungen aus mehrwertigen Alkoholen und Aminoalkoholen und/oder Polyaminen gewonnenen, vorwiegend linearen Kondensate.
   Als Polyhydroxylverbindungen besonders bewährt haben sich und daher vorzugsweise verwendet werden Mischungen, die, bezogen auf 100 Gew.-Teile, zweckmäßigerweise enthalten:
   b1) 0 bis 95 Gew.-Teile, vorzugsweise 20 bis 80 Gew.-Teile eines mit Sucrose gestarteten Polyether-polyols mit einer Hydroxylzahl von 300 bis 500, vorzugsweise 350 bis 450 auf der Grundlage von 1,2-Propylenoxid oder 1,2-Propylenoxid und Ethylenoxid,
   b2) 0 bis 15 Gew.-Teile, vorzugsweise 5 bis 15 Gew.-Teile eines mit Sorbit gestarteten Polyether-polyols mit einer Hydroxylzahl von 400 bis 600, vorzugsweise von 450 bis 550 auf der Grundlage von 1,2-Propylenoxid oder 1,2-Propylenoxid und Ethylenoxid,
   b3) 0 bis 20 Gew.-Teile, vorzugsweise 5 bis 15 Gew.-Teile eines mit einem Amin gestarteten Polyether-polyols mit einer Hydroxylzahl von 700 bis 850, vorzugsweise von 750 bis 800 auf der Grundlage von 1,2-Propylenoxid und
   b4) 0 bis 60 Gew. -Teile, vorzugsweise 5 bis 40 Gew.-Teile eines Polyether-polyols mit einer Hydroxylzahl von 400 bis 600, vorzugsweise von 450 bis 550 auf Basis von 1,2-Propylenoxid oder 1,2-Propylenoxid und Ethylenoxid, hergestellt unter Verwendung einer Mischung aus Sucrose und Triethanolamin im Gewichtsverhältnis von 1:2 bis 2:1 als Startermoleküle.
   Die PU-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von Kettenverlängerungsmitteln, Vernetzungsmitteln oder gegebenenfalls auch Gemischen davon als vorteilhaft erweisen. Als Kettenverlängerungs- und/ oder Vernetzungsmittel verwendet werden vorzugsweise Alkanolamine und insbesondere Diole und/oder Triole mit Molekulargewichten kleiner als 400, vorzugsweise von 60 bis 300. In Betracht kommen beispielsweise Alkanolamine, wie z.B. Ethanolamin und/oder Isopropanolamin, Dialkanolamine wie z.B. Diethanolamin, N-Methyl-, N-Ethyldiethanolamin, Diisopropanolamin, Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N'-Tetra(2-hydroxyethyl)ethylendiamin und N,N'-Tetra(2-hydroxypropyl)ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und aromatischen Diaminen, wie z.B. Toluylen-diaminen und/oder Diamino-diphenylmethanen sowie den vorgenannten Alkanolaminen, Diolen und/oder Triolen als Startermoleküle.
   Sofern zur Herstellung der PU-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 5 Gew.-%, bezogen auf das Gewicht der Polyhydroxylverbindung zum Einsatz.
c) Als Treibmittel können im Prinzip alle in den Aufbaukomponenten (a) bis (e) schwer- oder unlöslichen, bei Raumtemperatur flüssigen Perfluorverbindungen verwendet werden. Perfluoralkane sind bevorzugt, weil sie kommerziell erhältlich sind. Verwendet werden beispielsweise Perfluorpentan, Perfluorhexan, Perfluorheptan, Perfluoroctan oder Mischungen davon. Auch Mischungen von Perfluorbutan oder Perfluorpropan mit Perfluorhexan, Perfluorheptan oder Perfluoroctan können eingesetzt werden, wenn das Mischungsverhältnis so gewählt ist, daß die Mischungen bei Raumtemperatur flüssig sind.
d) Als Katalysatoren (d) werden insbesondere Verbindungen verwendet, die die Reaktion der Hydroxylgruppen enthaltenden Verbindungen der Komponente (b) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinn-diacetat, Dibutylzinn-dilaurat, Dibutylzinnmaleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin oder -hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).
e) Der Reaktionsmischung zur Herstellung der PU-Hartschaumstoffe können gegebenenfalls auch noch Hilfsmittel und/oder Zusatzstoffe (e) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkalioder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) und (b), einverleibt.
   Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-Chlorethyl)ethylendiphosphat.
   Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) und (b) zu verwenden.

Nähere Angaben über die oben genannten anderen üblichen Hilfsund Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers 1962 bzw. 1964, oder dem Kunststoff-Handbuch, Polyurethane, Band VII, Carl-Hauser-Verlag, München, Wien, 1. und 2. Auflage, 1966 und 1983, zu entnehmen.

Zur Herstellung der PU-hartschaumstoffe werden die organischen, gegebenenfalls modifizierten Polyisocyanate (a), die höhermolekularen Verbindungen mit mindestens zwei reaktiven Wasserstoffatomen (b) in solchen Mengen zur Umsetzung gebracht, daß das Äquivalenz-Verhältnis von NCO-Gruppen der Polyisocyanate (a) zur Summe der reaktiven Wasserstoffatome der Komponente (b) 0,85 bis 1,25:1, vorzugsweise 0,95 bis 1,15:1 und insbesondere ungefähr 1,0 bis 1,10:1 beträgt. Sofern die Urethangruppen enthaltende Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate (a) zur Summe der reaktiven Wasserstoffatome der Komponente (b) von 1,5 bis 10:1, vorzugsweise von 1,5 bis 6:1 angewandt.

Die PU-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponentenverfahren zu arbeiten und die Aufbaukomponenten (b), (d) und (e) in der Komponente A zu vereinigen und als Komponente B die organischen Polyisocyanate bzw. die modifizierten Polyisocyanate (a) zu verwenden.

A- und B-Komponente werden getrennt voneinander durch leichtes Erwärmen (40 bis 50°C) und Evakuieren (<500 mbar) entgast und entwässert. Anschließend wird in A oder B, vorzugsweise jedoch in A, die Perfluorverbindung unter Rühren einemulgiert. Dabei ist darauf zu achten, daß nicht erneut größere Luftmengen mit eingetragen werden. Notfalls muß die fertige Emulsion erneut kurz evakuiert werden, um diese überschüssige Luft wieder zu entfernen.

Die erhaltene Emulsion aus Perfluorverbindung und A-Komponente wird mit der B-Komponente bei einer Temperatur von 15 bis 90°C, vorzugsweise von 20 bis 35°C gemischt und in ein gegebenenfalls temperiertes Formwerkzeug eingebracht, in dem man die Reaktionsmischung aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zu PU-Hartschaum aushärten.

In einer Variante der Erfindung wird das Formwerkzeug nach dem Einbringen der Komponentenmischung evakuiert, so daß das Aufschäumen unter vermindertem Druck erfolgt. Je geringer der Druck beim Schäumen, desto niedriger wird die erhaltene Schaumdichte und desto höher kann der Siedepunkt der eingesetzten Perfluorverbindung sein. Der verwendete Druck in der Form sollte deshalb <1.000 mbar sein, läßt sich jedoch nicht generell angeben, da er vom Siedepunkt der eingesetzten Perfluorverbindung und vom gewünschten Raumgewicht des Schaumkörpers abhängt.

Die nach dem erfindungsgemäßen Verfahren hergestellten PU-Hartschaumstoffe besitzen vorzugsweise Dichten unter 200 g/l. Sie finden Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern und Fernwärmerohren. Die Produkte eignen sich ferner zur Isolierung von erwärmten Materialien, als Motorabdeckung und als Rohrschalen. Eine weitere Anwendung ist der Einsatz einer offenzelligen Variante als Schaumstoff in "vakuum insulation panels" oder in anderen evakuierten Dämmelementen.

### Beispiele

### Beispiele 1 und 2

Es wurde folgende A-Komponente hergestellt aus:
- 100 Gew.-Teilen: eines Polyetherpolyols der Hydroxylzahl 400 mg KOH/g, hergestellt durch anionische Polyaddition von 1,2-Propylenoxid an Glycerin als Startermolekül
- 3 Gew.-Teilen: Schaumstabilisator auf Polysiloxanbasis (Polyurax® SR 321 von UCC)
- 0,3 Gew.-Teilen: Dibutylzinndilaurat.

Die Mischung wurde 1 Stunde bei 70°C im Vakuum entgast und entwässert. Nach dem Abkühlen wurden 10 Gew.-Teile Perfluorpentan unter schnellem Rühren einemulgiert.

Die B-Komponente war eine Mischung aus Diphenylmethandiisocyanaten und Polyphenyl-polymethylen-polyisocyanaten (Roh-MDI mit einem NCO-Gehalt von 31 Gew.-%). Sie wurde ebenfalls durch Erwärmen im Vakuum entgast.

A- und B-Komponente wurden im Gewichtsverhältnis 100:108 in üblicher Weise vermischt und in einer Aluminiumform aufschäumen lassen. Die Form war evakuierbar, so daß das Aufschäumen einmal unter Normaldruck (1.050 mbar), in einem zweiten Versuch unter Unterdruck (600 mbar) vor sich ging.

Es wurden sehr feinzellige Schäume erhalten. Die Kennwerte sind in Tabelle 1 zusammengestellt.

**Tabelle 1**

| Bsp. | Druck in Schäumform (mbar) | Schaumdichte (g/l) | Mittlerer Zelldurchmesser (µm) |
|---|---|---|---|
| 1 | 1.050 | 181 | 37 |
| 2 | 600 | 128 | 39 |

### Beispiel 3

In die in Beispiel 1 und 2 beschriebene A-Komponente wurden verschiedene Mengen Perfluorpentan einemulgiert und wie in Beispiel 1 und 2 beschrieben verschäumt. Es wurden Schäume mit folgenden Eigenschaften erhalten (Tabelle 2).

**Tabelle 2**

| Menge PF-Pentan (% im Schaum) | Schaumdichte (g/l) | Mittlerer Zelldurchmesser (µm) |
|---|---|---|
| 2,2 | 289 | 63 |
| 4,4 | 159 | 54 |
| 6,6 | 116 | 62 |
| 8,8 | 102 | 59 |

### Beispiel 4

In 103 Gew.-Teile einer A-Komponente (entgast und entwässert) analog Beispiel 1 wurden 5 Gew.-Teile Perfluorhexan und 5 Gew.-Teile Perfluorpentan einemulgiert und die erhaltene Emulsion mit Roh-MDI im Verhältnis 100:95 umgesetzt und aufschäumen lassen. Es wurde ein Schaum der Dichte 195 g/l und einem mittleren Zelldurchmesser von 68 µm erhalten.

### Beispiel 5

10 Gew.-Teile Perfluorpentan wurden in einer entgasten Mischung aus 108 Gew.-Teilen Roh-MDI und 3 Gew.-Teilen Polyurax® SR 321 emulgiert. Die Emulsion wurde mit einer entgasten Mischung aus 100 Gew.-Teilen des in Beispiel 1 beschriebenen Polyetherpolyols und 0,3 Gew.-Teilen Dibutylzinndilaurat zusammengeführt und aufschäumen lassen. Es wurde ein Schaum der Dichte 142 g/l und einem mittleren Zelldurchmesser von 55 µm erhalten.

### Beispiel 6 (Vergleichsbeispiel)

### A-Komponente

- 91,3 Gew.-Teile: des in Beispiel 1 beschriebenen Polyetherpolyols
- 3 Gew.-Teile: Schaumstabilisator (Polyurax® SR 321)
- 2,5 Gew.-Teile: N,N-Dimethylcyclohexylamin
- 4,2 Gew.-Teile: Wasser

100 Gew.-Teile A-Komponente wurden mit 163 Gew.-Teilen Roh-MDI vermischt und aufschäumen lassen. Es wurde ein Schaum der Dichte 41 g/l und einem mittleren Zelldurchmesser von 231 µm erhalten.

### Beispiel 7 (Vergleichsbeispiel)

### A-Komponente

- 100 Gew.-Teile: des in Beispiel 1 beschriebenen Polyetherpolyols
- 3 Gew.-Teile: Schaumstabilisator (Polyurax® SR 321)
- 2,5 Gew.-Teile: N,N-Dimethylcyclohexylamin
- 3,8 Gew.-Teile: Wasser

In die Mischung wurden 9 Gew.-Teile Perfluorhexan einemulgiert. Anschließend wurde die erhaltene Emulsion mit 158 Gew.-Teilen Roh-MDI in der üblichen Weise umgesetzt und aufschäumen lassen. Es wurde ein Schaum der Dichte 40 g/l und einem mittleren Zelldurchmesser von 109 µm erhalten.

## Patentansprüche

1. Verfahren zur Herstellung von feinzelligen Polyurethan-Hartschaumstoffen durch Umsetzung von
a) Polyisocyanaten mit
b) Verbindungen mit mindestens zwei reaktiven Wasserstoffatomen in Gegenwart von
c) Treibmitteln,
d) Katalysatoren und gegebenenfalls
e) Hilfsmitteln und/oder Zusatzstoffen,
**dadurch gekennzeichnet, daß** als Treibmittel c) Perfluorverbindungen verwendet werden, die in mindestens einer der Komponenten a) oder b) emulgiert werden und aus den Komponenten a) bis e) vor der Umsetzung zum Polyurethan Wasser und Luft entfernt werden.

2. Verfahren nach Anspruch 1, **dadurch gekennzeichnet, daß** die Entfernung von Wasser und Luft vor dem Einbringen des Treibmittels in die Komponenten a) und/oder b) durchgeführt wird.

3. Verfahren nach Anspruch 1, **dadurch gekennzeichnet, daß** die Entfernung von Wasser und Luft durch Erwärmung der Komponenten a) bis e) durchgeführt wird.

4. Verfahren nach Anspruch 1, **dadurch gekennzeichnet, daß** die Entfernung von Wasser und Luft durch Erwärmung der Komponenten a) bis e) unter Vakuum durchgeführt wird.

5. Verfahren nach Anspruch 1, **dadurch gekennzeichnet, daß** die Entfernung von Wasser und Luft durch Erwärmung der Komponenten a) bis e) auf Temperaturen von 40 bis 50°C bei einem Druck von kleiner 500 mbar durchgeführt wird.

6. Verfahren nach Anspruch 1, **dadurch gekennzeichnet, daß** die Entfernung von Wasser und Luft durch Evakuieren der Schäumform nach dem Einbringen der Schaumkomponenten durchgeführt wird.

7. Verfahren nach Anspruch 1, **dadurch gekennzeichnet, daß** als Perfluorverbindungen Perfluoralkane eingesetzt werden.

8. Verfahren nach Anspruch 7, **dadurch gekennzeichnet, daß** die Perfluoralkane bei Raumtemperatur flüssig sind.

9. Verfahren nach Anspruch 7, **dadurch gekennzeichnet, daß** als Perfluoralkane Perfluorpentan, Perfluorhexan, Perfluoroctan oder Mischungen aus mindestens zwei dieser Perfluoralkane eingesetzt werden.

10. Verfahren nach Anspruch 7, **dadurch gekennzeichnet, daß** als Perfluoralkane Mischungen aus Perfluorbutan und/oder Perfluorpropan mit Perfluorhexan, Perfluorheptan und/oder Perfluoroctan eingesetzt werden.

11. Feinzellige Polyurethan-Hartschaumstoffe, herstellbar nach Anspruch 1.

12. Verwendung von feinzelligen Polyurethan-Hartschaumstoffen nach Anspruch 11 als Isoliermaterial.

## Claims

1. A process for producing fine-celled rigid polyurethane foams by reacting
a) polyisocyanates with
b) compounds having at least two reactive hydrogen atoms in the presence of
c) blowing agents,
d) catalysts and, if appropriate,
e) auxiliaries and/or additives,
wherein perfluorinated compounds which are emulsified in at least one of the components a) or b) are used as blowing agents c) and water and air are removed from the components a) to e) prior to the reaction to form the polyurethane.

2. The process according to claim 1, wherein the removal of water and air is carried out prior to introduction of the blowing agent into the components a) and/or b).

3. The process according to claim 1, wherein the removal of water and air is carried out by heating the components a) to e).

4. The process according to claim 1, wherein the removal of water and air is carried out by heating the components a) to e) under reduced pressure.

5. The process according to claim 1, wherein the removal of water and air is carried out by heating the components a) to e) to temperatures of from 40 to 50°C at a pressure of less than 500 mbar.

6. The process according to claim 1, wherein the removal of water and air is carried out by evacuation of the foaming mold after introduction of the mold components.

7. The process according to claim 1, wherein perfluoroalkanes are used as perfluorinated components.

8. The process according to claim 7, wherein the perfluoroalkanes are liquid at room temperature.

9. The process according to claim 7, wherein perfluoropentane, perfluorohexane, perfluorooctane or mixtures of at least two of these perfluoroalkanes are used as perfluoroalkanes.

10. The process according to claim 7, wherein mixtures of perfluorobutane and/or perfluoropropane with perfluorohexane, perfluoroheptane and/or perfluorooctane are used as perfluoroalkanes.

11. A fine-celled rigid polyurethane foam which can be prepared according to claim 1.

12. The use of a fine-celled rigid polyurethane foam according to claim 11 as insulating material.

## Revendications

1. Procédé pour la préparation de mousses dures en polyuréthane du type à fines alvéoles, par mise en réaction
a) de polyisocyanates avec
b) des composés comprenant au moins deux atomes d'hydrogène réactifs, en présence
c) d'agents moussants,
d) de catalyseurs, et le cas échéant
e) d'adjuvants et/ou d'additifs
**caractérisé en ce qu'**on utilise, à titre d'agents moussants c), des composés perfluorés qui sont présents sous la forme d'une émulsion dans au moins un des composants a) ou b), et on élimine l'eau et l'air des composants a) à e) avant la mise en réaction pour obtenir du polyuréthane.

2. Procédé selon la revendication 1, **caractérisé en ce qu'**on effectue l'élimination de l'eau et de l'air avant..d'introduire l'agent moussant dans les composants a) et/ou b).

3. Procédé selon la revendication 1, **caractérisé en ce qu'**on effectue l'élimination de l'eau et de l'air par réchauffement des composants a) à e).

4. Procédé selon la revendication 1, **caractérisé en ce qu'**on effectue l'élimination de l'eau et de l'air par réchauffement des composants a) à e) sous vide.

5. Procédé selon la revendication 1, **caractérisé en ce qu'**on effectue l'élimination de l'eau et de l'air par réchauffement des composants a) à e) à des températures de 40 à 50 °C, sous une pression inférieure à 500 mbar.

6. Procédé selon la revendication 1, **caractérisé en ce qu'**on effectue l'élimination de l'eau et de l'air en faisant le vide dans le moule de moussage après l'introduction des composants de mousse.

7. Procédé selon la revendication 1, **caractérisé en ce qu'**on utilise, à titre de composés perfluorés, des perfluoroalcanes.

8. Procédé selon la revendication 7, **caractérisé en ce que** les perfluoroalcanes sont liquides à la température ambiante.

9. Procédé selon la revendication 7, **caractérisé en ce qu'**on met en oeuvre à titre de perfluoroalcanes, le perfluoropentane, le perfluoro-hexane, le perfluorooctane ou des mélanges d'au moins deux de ces perfluoroalcanes.

10. Procédé selon la revendication 7, **caractérisé en ce qu'**on met en oeuvre, à titre de perfluoroalcanes, des mélanges de perfluorobutane et/ou de perfluoropropane avec du perfiuorohexane, du perfluoro-heptane et/ou du perfluorooctane.

11. Mousses dures de polyuréthane du type à fines alvéoles, que l'on peut préparer conformément à la revendication 1.

12. Utilisation de mousses dures de polyuréthane du type à fines alvéoles selon la revendication 11, à titre de matière isolante.
